# EUROPÄISCHE PATENTANMELDUNG

(11) **EP 2 548 719 A1**
(43) Veröffentlichungstag der Anmeldung: **23.01.2013**
(21) Anmeldenummer: 12173406.5
(22) Anmeldetag: 25.06.2012
(51) Int. Cl.: B29C 67/00

(54) **Vorrichtung und Verfahren zur schichtweisen Laser-Sintern von dreidimensionalen Objekten und dadurch erhaltenes Objekt**

(30) Priorität: 21.07.2011 DE 102011079521
(71) Anmelder: Evonik Degussa GmbH, 45128 Essen (DE)
(72) Erfinder: Grebe, Maik, 44805 Bochum (DE); Monsheimer, Sylvia, 45721 Haltern am See (DE); Diekmann, Wolfgang, 45731 Waltrop (DE); Kreutz, Juergen, 45772 Marl (DE)

(57) **Zusammenfassung**

Die vorliegende Erfindung betrifft eine Vorrichtung zur schichtweisen Herstellung von dreidimensionalen Objekten (6), Verfahren zur schichtweisen Herstellung sowie entsprechende Formkörper wobei aus einem Laser (1) der Laserstrahl (2) mittels eines Strahlformungssystems (3) umgeformt wird .

## Beschreibung

Die vorliegende Erfindung betrifft eine Vorrichtung zur schichtweisen Herstellung von dreidimensionalen Objekten, Verfahren zur schichtweisen Herstellung sowie entsprechende Formkörper.

Die zügige Bereitstellung von Prototypen ist eine in der jüngsten Zeit häufig gestellte Aufgabe. Verfahren die dies ermöglichen werden Rapid Prototyping/ Rapid Manufacturing oder auch Additive Fabrication- Verfahren genannt. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet. Die Bauraumtemperatur wird so gewählt, dass es während des Bauprozesses zu keinem Verzug der schichtweise hergestellten Strukturen kommt.

Ein Verfahren, welches besonders gut für den Zweck des Rapid Prototypings/Rapid Manufacturing geeignet ist, ist das Selektive Laser-Sintern (SLS). Das Verfahren des Laser-Sinterns (Rapid Prototyping) zur Darstellung von Formkörpern aus pulverförmigen Polymeren wird ausführlich in der Patentschriften US 6136948 und WO 96/06881 (beide DTM Corporation) beschrieben. Eine Vielzahl von Polymeren und Copolymeren wird für diese Anwendung beansprucht, wie z.B. Polyacetat, Polyester, Polyvinylchlorid, Polypropylen, Polyethylen, Ionomere und Polyamid.

Ein Problem bei dem oben beschriebenen Verfahren ist, dass das polymere Material durch lokale Temperaturspitzen im Fokus des Lasers geschädigt wird. Die lokalen Temperaturspitzen können zu Brüchen in Molekülketten des Polymers führen. Zudem werden bei der Verarbeitung mitunter Bestandteile der polymeren Werkstoffe durch Temperaturspitzen im Laserfokus freigesetzt. Die freigesetzten Stoffe stören den Prozess, da sich diese sich an wichtigen Bauteilen wie Linsen oder Pyrometer absetzen und deren Funktion beeinträchtigen. Eine einfache Reduzierung der Laserenergie ist nicht zielführend, da dann nicht ausreichend Energie eingetragen wird, um das pulverförmige Material schnell genug aufzuschmelzen. Der Prozess würde durch diese Maßnahme deutlich verlangsamt.

Aufgabe der vorliegenden Erfindung ist somit die Verbesserung des Laser-Sinter-Prozesses.

Überraschend wird gefunden, dass dieses Problem mit einer geeigneten Leistungsdichteverteilung bzw. Energiedichteverteilung im Laserfokus gelöst werden kann.

Ein erster Gegenstand der vorliegenden Erfindung ist eine Vorrichtung zur schichtweisen Herstellung von dreidimensionalen Objekten, mindestens umfassend einen Laser, wobei die Vorrichtung ein Strahlformungssystem enthält. Vorzugsweise wird durch das Strahlformungssystem der maximale Wert für die Leistungsdichte im Fokus auf weniger als 50%, vorzugsweise weniger als 20% und insbesondere bevorzugt auf weniger als 10 %, über den Mittelwert der Leistungsdichte im Fokus eingestellt.

Es hat sich überraschend gezeigt, dass wenn die Leistungsdichteverteilung derart gestaltet wird, dass der Maximalwert der Leistungsdichte im Fokus des Lasers den Wert für die Leistungsdichte über den gesamten Fokus nicht mehr als um 50% überschreitet, dass dadurch Molekulargewichtsabbau vermieden werden kann. Eine für Laserstrahlen übliche fast gaußförmige Leistungsdichteverteilung (die Amplitude des elektromagnetischen Feldes nimmt mit dem Abstand zur Ausbreitungsachse exponentiell ab) erfüllt diese Anforderung gerade nicht, vielmehr wird ein Molekulargewichtsabbau beobachtet. Insbesondere hat die erfindungsgemäße Vorrichtung den Vorteil, dass lediglich durch Anwesenheit eines Strahlformungssystems der erfindungsgemäße Vorteil erzielt werden kann, ohne dass größere Umbauten an den Beschichtungsanlagen erfolgen müssen.

Grundsätzlich eignet sich jedes dem Fachmann bekannte Strahlformungssystem in der Vorrichtung gemäß der vorliegenden Erfindung, vorzugsweise handelt es sich um einen Refraktiven Beam Shaper und/oder Homogenisierer.

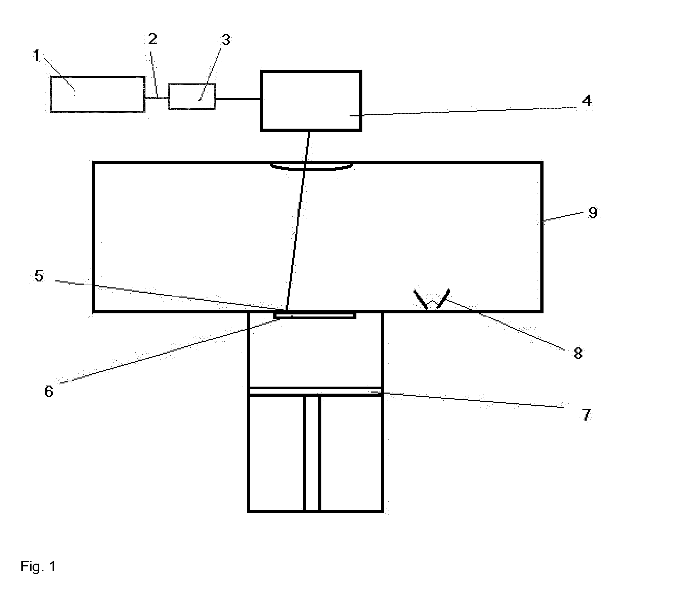

Eine Ausführungsform der Vorrichtung gemäß der vorliegenden Erfindung ist aus Fig. 1 ersichtlich. So weist die Vorrichtung zum schichtweisen Herstellen eines Objektes einen Baubehälter (9) auf. In diesem Behälter ist ein Träger (7) mit einer im Wesentlichen ebenen und zu der Oberkante des Baubehälters im Wesentlichen parallel ausgerichteten Oberseite angeordnet. Der Träger (7) ist zum Tragen eines zu bildenden Objektes (6) ausgebildet. Der Träger (7) ist durch eine (nicht dargestellte) Höhenverstelleinrichtung in vertikaler Richtung bewegbar. Die Ebene, in der Pulvermaterial aufgetragen und verfestigt wird, bildet eine Arbeitsebene (5). Aus einem Laser (1) wird der Laserstrahl (2) mittels einer geeigneten Vorrichtung (3) umgeformt, bevor er mittels eines Scansystems (4) auf eine Pulveroberfläche (5) gelenkt wird.

Der Baubehälter kann temperiert sein und/oder mit Inertgas, beispielsweise mit Argon, inertisiert werden.

Ein weiterer Gegenstand der vorliegenden Erfindung sind Verfahren zur schichtweisen Herstellung von dreidimensionalen Objekten aus Polymerpulvern, wobei das selektive Aufschmelzen bzw. Sintern das Polymerpulvers durch einen Laser erfolgt, dessen maximaler Wert für die Leistungsdichte im Fokus weniger als 50% über dem Mittelwert der Leistungsdichte im Fokus liegt. Vorzugsweise liegt der maximale Wert für die Leistungsdichte im Fokus weniger als 20% über dem Mittelwert der Leistungsdichte im Fokus, besonders bevorzugt weniger als 10 %.

Im erfindungsgemäßen Verfahren wird die Leistungsdichteverteilung im Fokus insbesondere mittels Strahlumformung eingestellt, vorzugsweise in Vorrichtungen wie vorab beschrieben, insbesondere bevorzugt erfolgt die Strahlumformung mittels Refraktivem Beam Shaper und/oder Homogenisierer.

Grundsätzlich eignen sich alle dem Fachmann bekannten Polymerpulver für den Einsatz in der erfindungsgemäßen Vorrichtung bzw. des erfindungsgemäßen Verfahrens. Geeignet sind insbesondere Thermoplaste und Thermoelaste wie beispielsweise Polyethylen (PE, HDPE, LDPE), Polypropylen (PP), Polyamide, Polyester, Polyesterester, Polyetherester, Polyphenylenether, Polyacetale, Polyalkylenterephthalate, insbesondere Polyethylenterephthalat (PET) und Polybutylenterephthalat (PBT), Polymethylmethacrylat (PMMA), Polyvinylacetal, Polyvinylchlorid (PVC), Polyphenylenoxid (PPO), Polyoxymethylen (POM), Polystyrol (PS), Acrylnitril-Butadien-Styrol (ABS), Polycarbonate (PC), Polyethersulfone, thermoplastische Polyurethane (TPU), Polyaryletherketone, insbesondere Polyetheretherketon (PEEK), Polyetherketonketon (PEKK), Polyetherketon (PEK), Polyetheretherketonketon (PEEKK), Polyaryletheretheretherketon (PEEEK) oder Polyetherketonetherketonketon (PEKEKK), Polyetherimide (PEI), Polyarylensulfide, insbesondere Polyphenylensulfid (PPS), thermoplastische Polyimide (PI), Polyamidimide (PAI), Polyvinylidenfluoride, sowie Copolymere dieser Thermoplaste wie z.B. ein Polyaryletherketon (PAEK) /Polyarylethersulfon (PAES)-Copolymer, Mischungen und/oder Polymerblends. Insbesondere bevorzugt umfasst das Polymerpulver mindestens ein Polyamid, insbesondere Polyamid 12.

Im Betrieb werden zunächst in der Regel in einem Rechner aufgrund eines Konstruktionsprogrammes oder dergleichen Daten über die Form des herzustellenden Objekts (6) erstellt bzw. abgespeichert. Diese Daten werden für die Herstellung des Objekts so aufbereitet, dass das Objekt in eine Vielzahl von horizontalen, im Vergleich zur Objektdimension dünnen Schichten zerlegt wird, und die Formdaten beispielsweise in Form von Datensätzen, z. B. CAD-Daten, für jede dieser Vielzahl von Schichten bereitgestellt werden. Die Erstellung und Aufbereitung der Daten für jede Schicht kann dabei vor der Herstellung oder auch gleichzeitig mit der Herstellung jeder Schicht erfolgen.

Anschließend wird zunächst die Bauplattform (7) mittels der Höheneinstellvorrichtung in die höchste Stellung gefahren, in der die Oberfläche der Bauplattform (7) in einer Ebene mit der Oberfläche des Bauraumes liegt, und anschließend um den Betrag der vorgesehenen Dicke der ersten Materialschicht abgesenkt, sodass innerhalb des entstehenden Ausschnitts ein abgesenkter Bereich gebildet ist, der seitlich von den Wänden des Ausschnitts und unten von der Oberfläche der Bauplattform (7) begrenzt ist. Beispielsweise mittels einer Aufbringvorrichtung (8) wird sodann eine erste Schicht des zu verfestigenden Materials mit der vorgesehenen Schichtdicke in den vom Ausschnitt und der Bauplattform (7) gebildeten Hohlraum bzw. den abgesenkten Bereich eingebracht und gegebenenfalls von einer Heizung auf eine geeignete Arbeitstemperatur, beispielsweise 100 °C bis 360 °C, vorzugsweise 120 °C bis 200 °C, insbesondere bevorzugt 140 °C bis 160 °C, erwärmt. Daraufhin steuert die Steuereinheit (4) die Ablenkeinrichtung derart, dass der abgelenkte Lichtstrahl (2) nacheinander an allen Stellen der Schicht auftrifft und dort das Material sintert bzw. aufschmilzt. Auf diese Weise kann zunächst eine feste Bodenschicht gebildet werden. In einem zweiten Schritt wird die Bauplattform (7) mittels der Höheneinstellvorrichtung um den Betrag einer Schichtdicke abgesenkt und mittels der Aufbringvorrichtung (8) in den damit entstehenden abgesenkten Bereich innerhalb des Ausschnittes eine zweite Materialschicht eingebracht, ggf. wiederum von der Heizung erwärmt.

In einer Ausführungsform kann die Ablenkeinrichtung diesmal von der Steuereinheit (4) derart gesteuert werden, dass der abgelenkte Lichtstrahl (2) nur auf dem an die Innenfläche des Ausschnittes angrenzenden Bereich der Materialschicht auftrifft und dort die Materialschicht durch Sintern verfestigt, wodurch eine erste ringförmige Wandschicht mit einer Wandstärke von etwa 2 bis 10 mm entsteht, die das verbleibende pulverförmige Material der Schicht vollständig umgibt. Dieser Teil der Steuerung stellt damit eine Einrichtung zum Erzeugen einer das zu bildende Objekt (6) umgebenden Behälterwand gleichzeitig mit der Bildung des Objekts in jeder Schicht dar.

Nach Absenken der Bauplattform (7) um den Betrag der Schichtdicke der nächsten Schicht, Aufbringen des Materials und Aufheizen in der gleichen Weise wie oben kann nun die Herstellung des Objekts (6) selbst beginnen. Hierzu steuert die Steuereinheit (4) die Ablenkeinrichtung derart, dass der abgelenkte Lichtstrahl (2) an solchen Stellen der Schicht auftrifft, die entsprechend den in der Steuereinheit gespeicherten Koordinaten des herzustellenden Objekts (6) verfestigt werden sollen. Bei den weiteren Schichten wird analog vorgegangen. Im Falle der gewünschten Herstellung eines ringförmigen Wandbereichs in Form einer Behälterwand, die das Objekt zusammen mit dem verbleibenden, nicht gesinterten Material umschließt und so beim Absenken der Bauplattform (7) unter den Arbeitstisch ein Austreten des Materials verhindert, wird bei jeder Objektschicht mittels der Einrichtung eine ringförmige Wandschicht auf die darunterliegende ringförmige Wandschicht aufgesintert. Auf die Erstellung der Wand kann verzichtet werden, wenn ein Wechselbehälter entsprechend EP 1037739 oder ein fest eingebauter Behälter verwendet wird.

Nach Abkühlung kann das gebildete Objekt aus der Vorrichtung entnommen werden.

Mit der erfindungsgemäßen Vorrichtung lassen sich beliebige Formkörper auf einfache Weise herstellen. Somit sind Formkörper hergestellt aus Polymerpulver mit einer erfindungsgemäßen Vorrichtung beziehungsweise mit einem erfindungsgemäßen Verfahren, ebenfalls Gegenstand der vorliegenden Erfindung. Insbesondere bevorzugt weisen die erfindungsgemäß hergestellten Formkörper eine Lösungsviskosität gem. ISO 307 (Schott AVS Pro, Lösemittel *m*-Kresol sauer, Volumetrisches Verfahren, Doppelbestimmung, Lösetemperatur 100°C, Lösezeit 2h, Polymerkonzentration 5g/l, Messtemperatur 25°C) auf, die nicht mehr als 10 % kleiner ist im Vergleich zu der des eingesetzten Polymerpulvers.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

Im Rahmen der vorliegenden Erfindung werden die in Tabelle 1 genannten Messmethoden verwendet, wobei diese, sofern technisch möglich, sowohl für die Bestimmung der Eigenschaften der eingesetzten Materialien als der für die erhaltenen Produkte eingesetzt werden.

**Tabelle 1**

| | **Wert** | **Einheit** | **Prüfart/Prüfgerät/Prüfparameter** |
|---|---|---|---|
| Schüttdichte | 0,445 | g/cm³ | DIN 53466 |
| Korngröße d50 | 55 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 37 | µm | Malvern Mastersizer 2000, Parameter siehe Korngröße d50 |
| Korngröße d90 | 78 | µm | Malvern Mastersizer 2000, Parameter siehe Korngröße d50 |
| <10,48µm | 4,0 | % | Malvern Mastersizer 2000, Parameter siehe Korngröße d50 |
| Rieselfähigkeit | 32 | s | DIN 53492 |
| Lösungsviskosität | 1,6 | - | ISO 307, Schott AVS Pro, Lösemittel *m*-Kresol sauer, Volumetrisches Verfahren, Doppelbestimmung, Lösetemperatur 100°C, Lösezeit 2h, Polymerkonzentration 5g/l, Messtemperatur 25°C |
| BET (spez. Oberfläche) | 6,4 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 187 | °C | DIN 53765 DSC 7 v. Perkin Elmer Heiz-/Kühlrate 20K/min |
| Rekristallisationstemperatur | 138 | °C | DIN 53765 DSC 7 v. Perkin Elmer Heiz-/Kühlrate 20K/min |
| Materialkonditionierung | Material wird vor Verarbeitung min. 24h bei 23°C und 50% Luftfeuchtigkeit gelagert | | |

Bei allen Beispielen wird ein nicht nachkondensationsfähiges Polyamid 12 Pulver nach DE19747309 mit den in Tabelle 1 aufgeführten Pulverkennwerten verarbeitet. Alle Beispiele werden der folgenden Beschreibung und Fig. 1 entsprechend bearbeitet. Die Baukammer (9) wird 180 Minuten auf 155 °C vorgeheizt. Danach wird die Temperatur in der Baukammer erhöht, so dass die Temperatur an der Pulveroberfläche 168 °C beträgt. Vor der ersten Belichtung werden 40 Schichten ohne Belichtung aufgetragen. In den nicht erfindungsgemäßen Beispielen wird aus einem Laser (1) der Laserstrahl (2) mittels eines Scansystems (4) auf eine temperierte (168 °C) und inertisierte (Argon) Pulveroberfläche (5) gelenkt. In den erfindungsgemäßen Beispielen wird der Laserstrahl (2) erst mittels einer geeigneten Vorrichtung (3) umgeformt, bevor er mittels eines Scansystems (4) auf die temperierte (168 °C) und inertisierte (Argon) Pulveroberfläche (5) gelenkt wird.

Das zu belichtende Bauteil wird zentral im Baufeld positioniert. Eine quadratische Fläche mit einer Kantenlänge von 50 mm wird ohne Konturbelichtung aufgeschmolzen. Danach wird die Bauplattform (7) um 0,15 mm abgesenkt und mittels eines Beschichters (8) eine neue Pulverschicht mit einer Geschwindigkeit von 100 mm/s aufgetragen. Diese Schritte werden wiederholt bis ein 6 mm hohes dreidimensionales Bauteil (6) entsteht. Nach Abschluss der Belichtung werden noch 40 weitere Schichten aufgetragen, bevor die Heizelemente der Vorrichtung ausgeschaltet werden und die Abkühlphase eingeleitet wird. Die Zeit, die für eine Schicht jeweils benötigte wird, liegt während des gesamten Bauprozesses unter 40 s.

Nach einer Abkühlzeit von mindestens 12 h wird das Bauteil entnommen und vom anhaftenden Pulver befreit. Aus dem Kern in der Mitte des Bauteils wird eine Probe für weitere Untersuchungen entnommen. An dieser Probe wird die Lösungsviskosität nach ISO 307 (Prüfgerät Schott AVS Pro, Lösemittel *m*-Kresol sauer, Volumetrisches Verfahren, Doppelbestimmung, Lösetemperatur 100 °C, Lösezeit 2 h, Polymerkonzentration 5 g/l) ermittelt. Die so ermittelte Viskositätszahl ergibt ein Maß für die Molekülmasse des Polymers.

Die Leistungsdichteverteilung im Laserfokus wird dabei in allen Beispielen mit dem FocusMonitor von der PRIMES GmbH in Anlehnung an die ISO 13694 vermessen. Die Laserleistung wird in Anlehnung an die ISO 11554 mit dem LM-1000 von der Coherent Deutschland GmbH gemessen, wobei die durchschnittliche Leistung angegeben wird. Der Fokus des Laserstrahls wird in der Mitte des Baufeldes nach ISO 11146 (Methode 2. Moment) vermessen. Die Versuchsanordnung wird jeweils so gestaltet, dass der Fokusdurchmesser auf Höhe der Pulveroberfläche 0,3 mm beträgt. Der Mittelwert der Leistungsdichte wird ermittelt indem die Laserleistung durch die Fläche des Laserfokus dividiert wird. Die Messungen werden in einem Labor bei 23 °C / 50 % Luftfeuchtigkeit durchgeführt. Die Leistungssteuerung des Lasers in den Beispielen erfolgt mittels eines Steuergeräts welches mit der PWM arbeitet, was zu einem pulsförmigen Leistungsausstoß des Lasers führt.

### Beispiel 1 (nicht erfindungsgemäß)

Als Laser (CO₂, Wellenlänge 10,6 µm) diente der ULR-50 von Universal Laser Systems Inc. mit einem Laser-Multi Controller LCT 3001 von MCA Micro Controller Applications und einem Synrad DC-5 Netzteil. Eingesetzt wird der Scanner Scanlab powerSCAN 50 mit varioSCAN 60. Die Pulsbreitenmodulation (PWM) Taktfrequenz beträgt 2 kHz und der Tastgrad 40 %. Der Energieeintrag des Lasers beträgt 60 mJ/mm² (Laserleistung 20,6 W, Scangeschwindigkeit Laserstrahl 1144 mm/s, Abstand Belichtungslinien 0,3 mm). Es ist eine mittlere Leistungsdichte über den gesamten Fokus von 29,1 kW/cm² gemessen worden. Der Maximalwert der Leistungsdichte beträgt 64,3 kW/cm². An der Bauteilprobe wird eine Lösungsviskosität nach ISO 307 von 1,55 ermittelt.

### Beispiel 2 (nicht erfindungsgemäß)

Eingesetzt wird hier der OTF150-30-0.2 Diodenlaser (Wellenlänge 980 nm) von Optotools mit einem Laser-Multi Controller LCT 3001 von MCA Micro Controller Applications, einem DL 1600 Netzteil von Heim Electronic und einem Raylase SS-20 Scanner. Die PWM wird mit Taktfrequenz 2 kHz und Tastgrad 40% eingestellt. Zur besseren Absorption der Laserenergie wird dem PA 12 Pulver 0,1 % Printex alpha zugemischt. Der Energieeintrag des Lasers beträgt 60 mJ/mm² (Laserleistung 52,6 W, Scangeschwindigkeit 2922 mm/s, Abstand Belichtungslinien 0,3 mm. Es ist eine Leistungsdichte über den gesamten Fokus von 74,4 kW/cm² gemessen worden. Der Maximalwert der Leistungsdichte beträgt 184,8 kW/cm². An der Bauteilprobe wird eine Lösungsviskosität nach ISO 307 von 1,54 ermittelt.

### Beispiel 3 (nicht erfindungsgemäß)

Eingesetzt wird hier der IPG-ELR-100-1550 Faserlaser (Wellenlänge 1550) mit einem Laser-Multi Controller LCT 3001 von MCA Micro Controller Applications, einem DL 1600 Netzteil von Heim Electronic und einem Raylase SS-10 Scanner. Die Pulsbreitenmodulation (PWM) Taktfrequenz beträgt 2 kHz und der Tastgrad 40 %. Zur besseren Absorption der Laserenergie wird dem PA 12 Pulver 0,1 % Printex alpha zugemischt. Der Energieeintrag des Lasers beträgt 60 mJ/mm² (Laserleistung 42,1 W, Scangeschwindigkeit 2338 mm/s, Abstand Belichtungslinien 0,3 mm). Es ist eine Leistungsdichte über den gesamten Fokus von 59,6 kW/cm² gemessen worden. Der Maximalwert der Leistungsdichte beträgt 144,2 kW/cm². An der Bauteilprobe wird eine Lösungsviskosität nach ISO 307 von 1,55 ermittelt.

### Beispiel 4 (erfindungsgemäß)

Als Laser diente der ULR-50 von Universal Laser Systems Inc. mit einem Laser-Multi Controller LCT 3001 von MCA Micro Controller Applications (PWM Taktfrequenz 2 kHz, Tastgrad 40 %) und einem Synrad DC-5 Netzteil. Der Laserstrahl wird mittels des piShaper 7_7_10.6 der MolTech GmbH umgeformt. Nach der Umformung des Laserstrahls wird dieser wieder mittels des Scanner Scanlab powerSCAN 50 mit varioSCAN 60 auf die Pulveroberfläche gelenkt. Der Energieeintrag des Lasers beträgt 60 mJ/mm² (Laserleistung 20,4 W, Scangeschwindigkeit Laserstrahl 1133 mm/s, Abstand Belichtungslinien 0,3 mm). Es ist eine Leistungsdichte über den gesamten Fokus von 28,8 kW/cm² gemessen worden. Der Maximalwert der Leistungsdichte beträgt 30,5 kW/cm². An der Bauteilprobe wird eine Lösungsviskosität nach ISO 307 von 1,58 ermittelt.

### Beispiel 5 (erfindungsgemäß)

Eingesetzt wird hier der OTF150-30-0.2 Diodenlaser (Wellenlänge 980nm) von Optotools mit einem Laser-Multi Controller LCT 3001 von MCA Micro Controller Applications, einem DL 1600 Netzteil von Heim Electronic. Die PWM wird mit Taktfrequenz 2 kHz und Tastgrad 40 % eingestellt. Der Laserstrahl wird mittels des piShaper 6_6_TiS der MolTech GmbH umgeformt und dann mit einem Raylase SS-20 Scanner auf die Pulveroberfläche gelenkt. Zur besseren Absorption der Laserenergie wird dem PA 12 Pulver 0,1 % Printex alpha zugemischt. Der Energieeintrag des Lasers beträgt 60 mJ/mm² (Laserleistung 52,5 W, Scangeschwindigkeit 2916 mm/s, Abstand Belichtungslinien 0,3 mm. Es ist eine Leistungsdichte über den gesamten Fokus von 74,3 kW/cm² gemessen worden. Der Maximalwert der Leistungsdichte beträgt 78,1 kW/cm². An der Bauteilprobe wird eine Lösungsviskosität nach ISO 307 von 1,58 ermittelt.

### Beispiel 6 (erfindungsgemäß)

Eingesetzt wird hier der IPG-ELR-100-1550 Faserlaser (Wellenlänge 1550) mit einem Laser-Multi Controller LCT 3001 von MCA Micro Controller Applications und einem DL 1600 Netzteil von Heim Electronic. Die Pulsbreitenmodulation (PWM) Taktfrequenz beträgt 2 kHz und der Tastgrad 40 %. Der Laserstrahl wird mittels des piShaper 6_6_1550 der MolTech GmbH umgeformt und dann mit einem Raylase SS-1 0 Scanner auf die Pulveroberfläche gelenkt. Zur besseren Absorption der Laserenergie wird dem PA 12 Pulver 0,1 % Printex alpha zugemischt. Der Energieeintrag des Lasers beträgt 60mJ/mm² (Laserleistung 42,0 W, Scangeschwindigkeit 2333 mm/s, Abstand Belichtungslinien 0,3 mm). Es ist eine Leistungsdichte über den gesamten Fokus von 59,4 kW/cm² gemessen worden. Der Maximalwert der Leistungsdichte beträgt 62,5 kW/cm². An der Bauteilprobe wird eine Lösungsviskosität nach ISO 307 von 1,58 ermittelt.

### Beispiel 7 (erfindungsgemäß)

Als Laser diente der ULR-50 von Universal Laser Systems Inc. mit einem Laser-Multi Controller LCT 3001 (PWM Taktfrequenz 2 kHz, Tastgrad 40 %) von MCA Micro Controller Applications. Der Laserstrahl wird mittels des Beam Shapers TH-205-A-Y-A von Laser Components GmbH umgeformt. Nach der Umformung des Laserstrahls wird dieser wieder mittels des Scanner Scanlab powerSCAN 50 mit varioSCAN 60 auf die Pulveroberfläche gelenkt. Der Energieeintrag des Lasers beträgt 60 mJ/mm² (Laserleistung 20,5 W, Scangeschwindigkeit Laserstrahl 1138 mm/s, Abstand Belichtungslinien 0,3 mm). Es ist eine Leistungsdichte über den gesamten Fokus von 29,0 kW/cm² gemessen worden. Der Maximalwert der Leistungsdichte beträgt 30,5 kW/cm². An der Bauteilprobe wird eine Lösungsviskosität nach ISO 307 von 1,59 ermittelt.

### Beispiel 8 (erfindungsgemäß)

Als Laser diente der ULR-50 von Universal Laser Systems Inc. mit einem Laser-Multi Controller LCT 3001 (PWM Taktfrequenz 2 kHz, Tastgrad 40 %) von MCA Micro Controller Applications. Der Laserstrahl wird mittels des RD-202-A-Y-A (Laser Components GmbH) homogenisiert und mit dem Beam Shapers TH-205-A-Y-A von Laser Components GmbH umgeformt. Nach der Umformung des Laserstrahls wird dieser wieder mittels des Scanner Scanlab powerSCAN 50 mit varioSCAN 60 auf die Pulveroberfläche gelenkt. Der Energieeintrag des Lasers beträgt 60 mJ/mm² (Laserleistung 20,3W, Scangeschwindigkeit Laserstrahl 1144 mm/s, Abstand Belichtungslinien 0,3 mm). Es ist eine Leistungsdichte über den gesamten Fokus von 28,7 kW/cm² gemessen worden. Der Maximalwert der Leistungsdichte beträgt 29,5 kW/cm². An der Bauteilprobe wird eine Lösungsviskosität nach ISO 307 von 1,6 ermittelt.

Durch die Strahlumformung ist es gelungen eine deutlich gleichmäßigere Leistungsdichteverteilung im Laserfokus zu erreichen. Durch die Vermeidung von Leistungsspitzen kann ein Molekulargewichtsabbau, gemessen durch die Lösungsviskosität, vermieden bzw. vermindert werden.

## Patentansprüche

1. Vorrichtung zur schichtweisen Herstellung von dreidimensionalen Objekten, mindestens umfassend einen Laser, **dadurch gekennzeichnet, dass** die Vorrichtung ein Strahlformungssystem enthält.

2. Vorrichtung gemäß Anspruch 1, **dadurch gekennzeichnet, dass** das Strahlformungssystem den maximalen Wert für die Leistungsdichte im Fokus auf weniger als 50% über den Mittelwert der Leistungsdichte im Fokus einstellt.

3. Vorrichtung gemäß Anspruch 1 oder 2, **dadurch gekennzeichnet, dass** das Strahlumformungssystem ein Refraktiver Beam Shaper und/oder Homogenisierer ist.

4. Verfahren zur schichtweisen Herstellung von dreidimensionalen Objekten aus Polymerpulvern, wobei das selektive Aufschmelzen bzw. Sintern das Polymerpulvers durch einen Laser erfolgt, dessen maximaler Wert für die Leistungsdichte im Fokus weniger als 50% über den Mittelwert der Leistungsdichte im Fokus liegt.

5. Verfahren gemäß Anspruch 4, **dadurch gekennzeichnet, dass** der maximale Wert für die Leistungsdichte im Fokus weniger als 20% über den Mittelwert der Leistungsdichte im Fokus liegt.

6. Verfahren gemäß Anspruch 4, **dadurch gekennzeichnet, dass** der maximale Wert für die Leistungsdichte im Fokus weniger als 10% über den Mittelwert der Leistungsdichte im Fokus liegt.

7. Verfahren gemäß einem oder mehreren der Ansprüche 4 bis 6, **dadurch gekennzeichnet, dass** die Leistungsdichteverteilung im Fokus mittels Strahlumformung eingestellt wird.

8. Verfahren gemäß Anspruch 7, **dadurch gekennzeichnet, dass** die Strahlumformung mittels Refraktivem Beam Shaper und/oder Homogenisierer erfolgt.

9. Formkörper hergestellt aus Polymerpulver mit einer Vorrichtung gemäß einem der Ansprüche 1 bis 3 beziehungsweise mit einem Verfahren gemäß der Ansprüche 4 bis 8.

10. Formkörper gemäß Anspruch 9, **dadurch gekennzeichnet, dass** sie eine Lösungsviskosität gemäß ISO 307 aufweisen, die nicht mehr als 10% kleiner ist im Vergleich zu der des eingesetzte Polymerpulvers.
